# EUROPEAN PATENT APPLICATION

(11) **EP 4 686 081 A1**
(43) Date of publication of application: **28.01.2026**
(21) Application number: 24845765.7
(22) Date of filing: 29.05.2024
(51) Int. Cl.: H02P 23/26, H02P 27/08, H02M 1/42

(54) **POWER SUPPLY DEVICE, ELECTRONIC DEVICE INCLUDING SAME, AND POWER SUPPLY METHOD**

(30) Priority: 26.07.2023 KR 20230097606
(71) Applicant: Samsung Electronics Co., Ltd., Suwon-si, Gyeonggi-do 16677 (KR)
(72) Inventor: AHN, Hyomin, Suwon-si, Gyeonggi-do 16677 (KR); KANG, Jeongil, Suwon-si, Gyeonggi-do 16677 (KR); KIM, Junseok, Suwon-si, Gyeonggi-do 16677 (KR); SIN, Hyowon, Suwon-si, Gyeonggi-do 16677 (KR); LEE, Junghyun, Suwon-si, Gyeonggi-do 16677 (KR); LEE, Joohyun, Suwon-si, Gyeonggi-do 16677 (KR); LEE, Teaho, Suwon-si, Gyeonggi-do 16677 (KR); CHO, Jehyung, Suwon-si, Gyeonggi-do 16677 (KR)
(74) Representative: Gulde & Partner
(86) International application number: PCT/KR2024/007287
(87) International publication number: WO 2025/023461

(57) **Abstract**

The present disclosure provides a power supply device, an electronic device including the power supply device, and a power supply method. The electronic device comprises: a motor; a power supply device for receiving AC power to generate DC power; a motor driver for receiving the DC power and generating driving power to provide the driving power to the motor; and a processor for providing the motor driver with a control signal for controlling the motor. The power supply device comprises: a rectifier circuit for rectifying the AC power; a PFC converter unit for matching voltage and current of the rectified AC power in the same phase; and an inverter unit for transforming output power of the PFC converter unit into power of a preconfigured first magnitude, and outputting the transformed power, wherein the PFC converter unit identifies a harmonic component of the current rectified by the rectifier circuit, and matches the voltage and current of the rectified AC power in the same phase on the basis of the identified harmonic component.

## Description

### METHOD [Technical Field]

The disclosure relates to a power supply device, an electronic apparatus including the same, and a power supply method. Specifically, the disclosure relates to a power supply device including a PFC converter for improving a power factor, and a control method thereof.

### [Background Art]

A PFC converter is a converter that performs a function of converting an input current into a form of a sinusoidal wave of the same phase as an input voltage, and improving a power factor value between the input current and the input voltage (in particular, converting the input current such that a power factor value between the input current and the input voltage becomes 1).

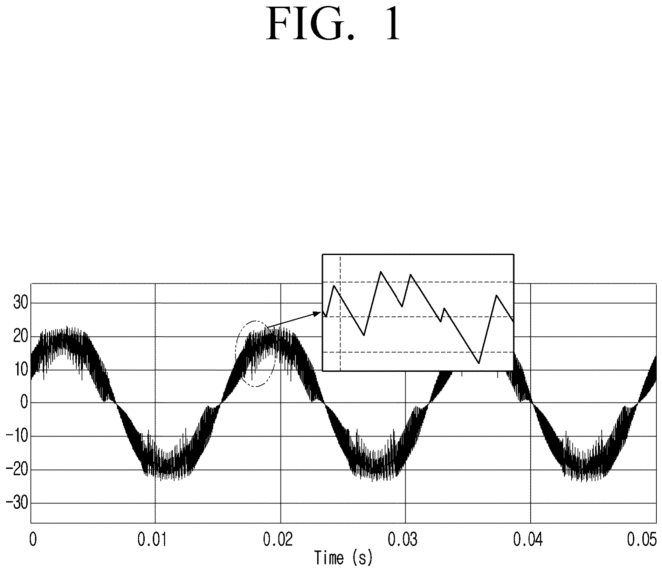

Referring to FIG. 1, in a process of using an electronic apparatus, an input current including a harmonic component may be applied to a power factor correction (PFC) converter, and an input current including a harmonic component causes noises, heat generation, and vibration of the electronic apparatus. As reasons that a harmonic component is included in an input current of a PFC converter, there are various reasons such as a design error of an inductor inside the PFC converter, abrasion of electronic elements inside the electronic apparatus, etc.

Meanwhile, most of the causes of such an input current including a harmonic component are generated later in a process of using an electronic apparatus. In the past, for resolving this problem, only a method of replacing an inductor or worn-out electronic elements of an electronic apparatus, or redesigning an electronic apparatus according to a rated voltage in the country wherein the electronic apparatus is used was suggested.

### [Disclosure of Invention]

### [Solution to Problem]

An electronic apparatus according to an embodiment of the disclosure includes a motor, a power supply device configured to receive an input of alternating current (AC) power and generate direct current (DC) power, a motor driver configured to be provided with the DC power and generate driving power and provide the power to the motor, and a processor configured to provide a control signal for controlling the motor to the motor driver. Here, the power supply device includes a rectifier circuit configured to rectify the AC power, a PFC converter part configured to match a voltage and a current of the rectified AC power in the same phase, and an inverter part configured to transform output power of the PFC converter part into power of a predetermined first size and output the power, and the PFC converter part is configured to identify a harmonic component of the current rectified at the rectifier circuit, and match the voltage and the current of the rectified AC power in the same phase based on the identified harmonic component.

Here, the PFC converter part may include at least one switch that is connected in parallel to the rectifier circuit, a first detection part configured to detect a size and a phase of the voltage rectified at the rectifier circuit, a second detection part configured to identify the harmonic component of the current rectified at the rectifier circuit, and a controller configured to generate a control signal for controlling the at least one switch based on the detected size of the voltage, the detected phase of the voltage, and the identified harmonic component.

Here, the second detection part may identify a harmonic component of greater than or equal to a predetermined frequency in the current rectified at the rectifier circuit, and size information of the harmonic component.

Here, the second detection part may include a high-pass filter part configured to filter a band smaller than the predetermined frequency, and a calculation part configured to calculate an average value by using output information of the high-pass filter part.

Here, the predetermined frequency may have a value higher than or equal to 1Khz.

The controller may generate a control signal that makes the current rectified at the rectifier circuit have the same phase as the identified phase of the voltage, and makes the identified harmonic component offset (or eliminate or cancel).

Here, the controller may generate a control signal that makes the identified harmonic component offset based on any one control method among a P control method, a PI control method, and a PID control method.

Also, the control signal may be a PWM signal.

In addition, the PFC converter part may include an inductor of which one end is connected to an output end of the rectifier circuit, and of which the other end is connected to the at least one switch.

A power supply device according to an embodiment of the disclosure includes a rectifier circuit configured to rectify AC power, a PFC converter part configured to match a voltage and a current of the rectified AC power in the same phase, and an inverter part configured to transform output power of the PFC converter part into power of a predetermined first size(or level) and output the power. The PFC converter part is configured to identify a harmonic component of the current rectified at the rectifier circuit, and match the voltage and the current of the rectified AC power in the same phase based on the identified harmonic component.

Here, the PFC converter part may include at least one switch that is connected in parallel to the rectifier circuit, a first detection part configured to detect a size and a phase of the voltage rectified at the rectifier circuit, a second detection part configured to identify the harmonic component of the current rectified at the rectifier circuit, and a controller configured to generate a control signal for controlling the at least one switch based on the detected size of the voltage, the detected phase of the voltage, and the identified harmonic component.

Here, the second detection part may identify a harmonic component of greater than or equal to a predetermined frequency in the current rectified at the rectifier circuit, and size information of the harmonic component.

Here, the second detection part may include a high-pass filter part configured to filter a band smaller than the predetermined frequency, and a calculation part configured to calculate an average value by using output information of the high-pass filter part.

A method of controlling an electronic apparatus according to an embodiment of the disclosure includes the steps of rectifying AC power through a rectifier circuit of the electronic apparatus, selectively outputting the rectified AC power by using a PFC converter part configured to match a voltage and a current of the rectified AC power in the same phase, transforming an output voltage of the PFC converter part into power of a predetermined first size and outputting the power, and providing a first control signal for controlling a motor of the electronic apparatus based on the power of the predetermined first size to a motor driver of the electronic apparatus. Also, the step of selectively outputting includes the steps of identifying a harmonic component of the rectified current, generating a second control signal for matching the voltage and the current of the rectified AC power in the same phase based on the identified harmonic component, and providing the generated second control signal to a switch configured to selectively output the rectified AC power.

Here, the step of identifying may include the step of identifying a harmonic component of greater than or equal to a predetermined frequency in the current rectified at the rectifier circuit, and size information of the harmonic component, and the step of generating the second control signal may include the step of calculating an average value corresponding to(or for) the harmonic component based on the identified size information of the harmonic component, and generating a control signal for matching the voltage and the current of the rectified AC power in the same phase based on the calculated average value.

Here, the predetermined frequency may be higher than or equal to 1Khz.

Also, the second control signal may be a PWM signal for controlling at least one switch that is connected in parallel to the rectifier circuit.

In a non-transitory computer-readable recording medium storing computer instructions that, when executed by a processor of an electronic apparatus, cause the electronic apparatus perform operations according to an embodiment of the disclosure, the operations include the steps of rectifying AC power through a rectifier circuit of the electronic apparatus, selectively outputting the rectified AC power by using a PFC converter part configured to match a voltage and a current of the rectified AC power in the same phase, transforming an output voltage of the PFC converter part into power of a predetermined first size and outputting the power, and providing a first control signal for controlling a motor of the electronic apparatus based on the power of the predetermined first size to a motor driver of the electronic apparatus. Also, the step of selectively outputting includes the steps of identifying a harmonic component of the rectified current, generating a second control signal for matching the voltage and the current of the rectified AC power in the same phase based on the identified harmonic component, and providing the generated second control signal to a switch configured to selectively output the rectified AC power.

### [Brief Description of Drawings]

FIG. 1 is a diagram illustrating an input current of a PFC converter part including a harmonic component;
FIG. 2 is a block diagram of a power supply device according to an embodiment of the disclosure;
FIG. 3 is an exemplary diagram of a power supply device according to an embodiment of the disclosure;
FIG. 4 is a control block diagram illustrating a configuration of a second detection part according to an embodiment of the disclosure;
FIG. 5 is a diagram illustrating an input current from which a harmonic component was removed according to a control signal of a PFC converter according to an embodiment of the disclosure;
FIG. 6 is a configuration diagram of an electronic apparatus including a power supply device according to an embodiment of the disclosure; and
FIG. 7 and FIG. 8 are sequence diagrams schematically illustrating a power supply method according to an embodiment of the disclosure.

### [Mode for Invention]

Various modifications may be made to the embodiments of the disclosure, and there may be various types of embodiments. Accordingly, specific embodiments will be illustrated in drawings, and the embodiments will be described in detail in the detailed content for implementing the disclosure. However, it should be noted that the various embodiments are not for limiting the scope of the disclosure to a specific embodiment, but they should be interpreted to include various modifications, equivalents, and/or alternatives of the embodiments of the disclosure. In addition, with respect to the detailed description of the drawings, similar components may be designated by similar reference numerals.

Also, in describing the disclosure, in case it is determined that detailed explanation of related known functions or components may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, the terms used in the disclosure are used just to explain specific embodiments, and are not intended to limit the scope of the disclosure. In addition, singular expressions include plural expressions, unless defined obviously differently in the context.

Also, in the disclosure, expressions such as "have," "may have," "include" and "may include" should be construed as denoting that there are such characteristics (e.g.: elements such as numerical values, functions, operations, and components), and the terms are not intended to exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Also, in the embodiments of the disclosure, 'a module' or 'a unit' may perform at least one function or operation, and may be implemented as hardware or software, or as a combination of hardware and software. Further, a plurality of 'modules' or 'units' may be integrated into at least one module and implemented as at least one processor, excluding 'a module' or 'a unit' that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings, such that those having ordinary skill in the art to which the disclosure belongs can easily carry out the disclosure.

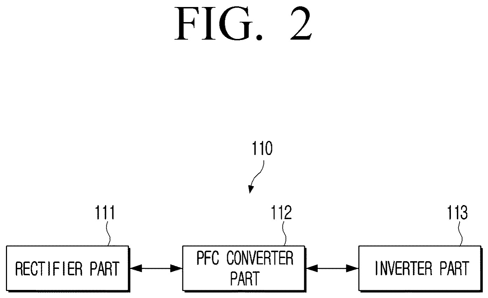

FIG. 2 is a block diagram of a power supply device 110 according to an embodiment of the disclosure.

Referring to FIG. 2, the power supply device 110 may include a rectifier part 111, a PFC converter part 112, and an inverter part 113. The power supply device 110 may be a device that is included in an electronic apparatus 100, and supplies power to the electronic apparatus 100. Here, the electronic apparatus 100 may be implemented as various electronic apparatuses 100 such as an air conditioner, a washing machine, a dryer, a circulator, etc. including a motor.

The rectifier part 111 rectifies AC power input into the power supply device 110. Specifically, the rectifier part 111 may rectify a voltage of an AC signal whose direction is converted by a predetermined cycle to a DC voltage in one direction. For example, the rectifier part 111 may rectify an AC voltage (220V, 60Hz) applied from the outside to a DC voltage. The rectifier part 111 may further include a smoothing part (not shown) that smooths a rectified DC voltage.

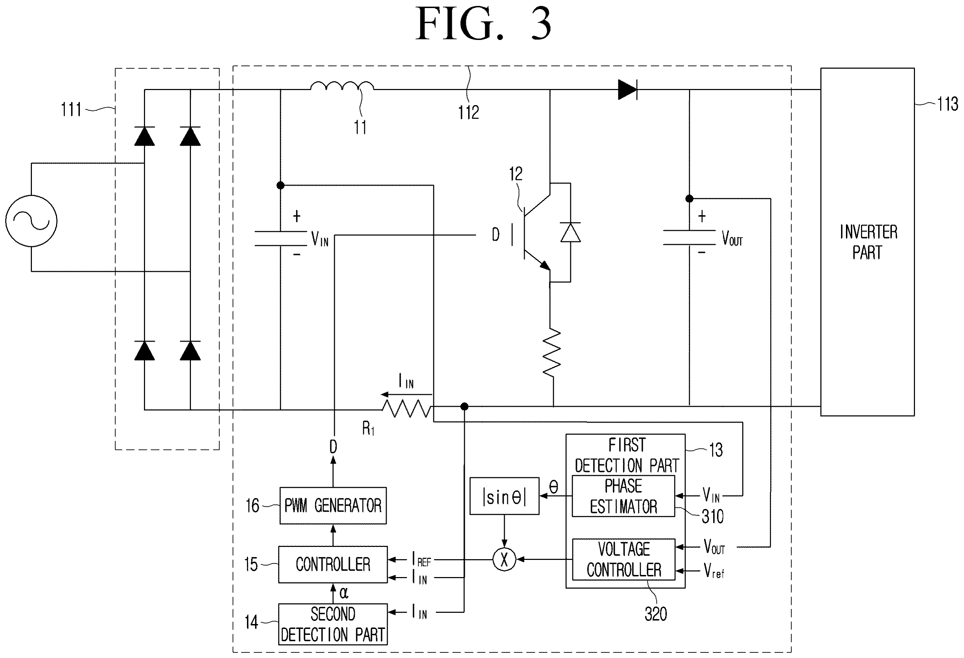

FIG. 3 is an exemplary diagram of a power supply device according to an embodiment of the disclosure. In FIG. 3, the PFC converter part 112 was illustrated as a boost PFC topology, but this is merely an example, and the PFC converter part 112 may be implemented as other various PFC topologies such as an interleaved boost PFC topology and a totem-pole PFC topology, etc.

The rectifier part 111 may be implemented as a rectifier circuit. Specifically, as illustrated in FIG. 3, the rectifier part 111 may be implemented as a full-wave bridge rectifier circuit. The rectifier part 111 may be electrically connected with the PFC converter part 112, and an input voltage rectified by the rectifier part 111 may be applied to the PFC converter part 112.

The PFC converter part 112 converts a rectified input voltage. Specifically, the PFC converter part 112 may receive an input of a voltage (or a current) rectified at the rectifier part 111, and convert the size of the input voltage (or current) through a converting operation.

Also, the PFC converter part 112 matches the phase of an input voltage rectified through the rectifier part 111 and the phase of an input current that was input as the input voltage was applied in the same phase. For example, in case an AC voltage (i.e., an input voltage) of 220Vrms and 60Hz is applied, the PFC converter part 112 may convert an input current that was input after being rectified at the rectifier part 111 to a current of 60Hz that has the same phase as the applied AC voltage (i.e., the input voltage). By this, the PFC converter part 112 can reduce the loss of the power supply device 110 (or the electronic apparatus 100 including the power supply device 110) by reactive power, and improve power efficiency. That is, the PFC converter part 112 can improve a power factor of the electronic apparatus 100 including the power supply device 110.

The PFC converter part 112 as above can be used in an electronic apparatus for satisfying the regulations for harmonics set by the organization that supplied power.

The inverter part 113 transforms output power of the PFC converter part 112 into power of a predetermined first size and outputs the power. Specifically, the inverter part 113 may receive a voltage (or a current) output by the PFC converter part 112, and then transform it into a voltage (or a current) of the predetermined first size, and output it. As an example, the inverter part 113 may transform a voltage that was varied by a switching operation of the PFC converter part 112 into an AC signal (e.g., a voltage or a current) for driving the motor included in the electronic apparatus 100.

For this, the inverter part 113 may include at least one switch, and here, the inverter part 113 may transform power input into the inverter part 113 (i.e., an output voltage (or current) applied though the PFC converter part 112) into AC power of the predetermined first size through a switching operation for at least one switch included in the inverter part 113. Here, the predetermined first size may be set based on a rated voltage that was set according to the electronic apparatus 100 wherein the power supply device 110 is included or to which the power supply device 110 is connected.

Meanwhile, the motor may be a component that provides power for rotating a fan, etc. included in the electronic apparatus 100. As an example, in case the electronic apparatus 100 is implemented as an air conditioner, the motor may discharge the outdoor air or compress a refrigerant of a compressor by being connected to an outdoor fan of the electronic apparatus 100 and rotating the outdoor fan. Meanwhile, the motor may include a stepping motor, a servo motor, a DC motor, etc.

Referring to FIG. 3, the PFC converter part 112 may further include an inductor 11 of which one end is connected to an output end of the rectifier circuit, and of which the other end is connected to the at least one switch 12. To the inductor 11, an input current rectified through the rectifier circuit is applied.

The at least one switch 12 connected to the other end of the inductor 11 may be turned on/off by a control signal of the PFC converter part 112. In particular, the at least one switch 12 may be turned on/off by a pulse width modulation (PWM) signal that was generated based on a control signal output from a controller 15 of the PFC converter part 112. Hereinafter, the controller that outputs a control signal for the at least one switch 12 will be referred to as a first controller 15.

When the at least one switch 12 is turned on, an output voltage (i.e., a DC voltage) of the PFC converter part 112 may be boosted. Here, when the at least one switch 12 is turned on, a voltage applied to a resistance connected to the other end of the at least one switch 12 is also boosted, and accordingly, an input current (or an inductor current I_{L}) may increase.

Meanwhile, when the at least one switch 12 is turned off, the output voltage (i.e., the DC voltage) of the PFC converter part 112 may be stepped down. Specifically, when the at least one switch 12 is turned off, a voltage may not be applied to the resistance connected to the other end of the at least one switch 12, and accordingly, the input current (or the inductor current I_{L}) may decrease.

As described above, the PFC converter part 112 may perform control such that an input current repeats increase and decrease, and match the phase of the input current with the phase of an input voltage by repeatedly turning on and off the at least one switch 12 based on a pulse width modulation signal output from the first controller 15.

Meanwhile, the at least one switch 12 may be implemented as a power semiconductor switch. For example, the at least one switch 12 may be implemented by a Junction Field-Effect Transistor (JFET), an Insulated Gate Bipolar Transistor (IGBT), and a Bipolar Junction Transistor (BJT), etc.

Meanwhile, the PFC converter part 112 may identify a harmonic component of a current rectified at the rectifier circuit, and match a voltage and a current of the rectified AC power in the same phase based on the identified harmonic component.

Specifically, the PFC converter part 112 may identify a harmonic component of an input current that is input through the inductor 11 after being rectified at the rectifier circuit. Here, the harmonic may be a frequency of n times (n is a natural number that is 2 or more) of a frequency of an output current. Here, the PFC converter part 112 may identify a high-order harmonic component of the input current, and generate a control signal controlling the at least one switch 12 such that the identified high-order harmonic component is offset in an input signal.

The PFC converter part 112 for offsetting a harmonic component of an input current may include a first detection part 13, a second detection part 14, and a first controller 15.

The first detection part 13 may detect a size and a phase of a voltage rectified at the rectifier circuit. In particular, the first detection part 13 may include a phase estimator 310 and a voltage controller 320.

The phase estimator 310 may identify a phase of an input voltage in real time by estimating a phase for the input voltage.

The voltage controller 320 may receive inputs of a DC voltage which is an output voltage of the PFC converter and a reference voltage, and output a signal for generating a reference current of the first controller 15. The signal output by the voltage controller 320 may be used as a command current which is an input of the first controller 15. Specifically, a value which is a result of a multiplication of an absolute value of a sine value corresponding to the phase of the input voltage identified at the phase estimator 310 and the output signal of the voltage controller 320 may be input as a command current of the first controller 15. In other words, the command current may be generated based on the phase of the input voltage.

After receiving the inputs of the command current and the input current, the first controller 15 may output a control signal that turns on/off the at least one switch 12 such that the input current can track the command current. Here, the control signal may include compensation information regarding the input current for the input current to track the command current. Accordingly, the first controller 15 may also be referred to as the current controller 15. Meanwhile, the first controller 15 may output a compensation value for an input current according to any one control method among a P control method, a PI control method, or a PID control method.

The control signal output by the first controller 15 may be input into a PWM signal generator, and converted into a PWM signal controlling the at least one switch 12. When the PWM signal is applied to the at least one switch 12, the at least one switch 12 may be turned on/off. Then, as the at least one switch 12 repeats turn-on/turn-offs, the input current applied to the inductor 11 (or an inductor current) may also repeat increase and decrease and track the command current. Accordingly, the phase of the input current may be adjusted to the same phase as the phase of the input voltage.

The control signal output from the first controller 15 may include not only compensation information for the input current to track the command current, but also compensation information for offsetting the harmonic component of the input current. In particular, the compensation information for offsetting the harmonic component of the input current may be obtained by the second detection part 14.

The second detection part 14 may identify the harmonic component of the input current rectified at the rectifier circuit. Then, the second detection part 14 may obtain the compensation information regarding the input current for offsetting the harmonic component included in the input current based on the identified harmonic component. Accordingly, the second detection part 14 may include the first controller 15. Meanwhile, the second detection part 14 may transmit the obtained compensation information to the first controller 15.

Accordingly, the first controller 15 may output a control signal for the at least one switch 12 based on the compensation information for the input current to track the command current on the basis of the input current and the command current, and the compensation information transmitted from the second detection part 14.

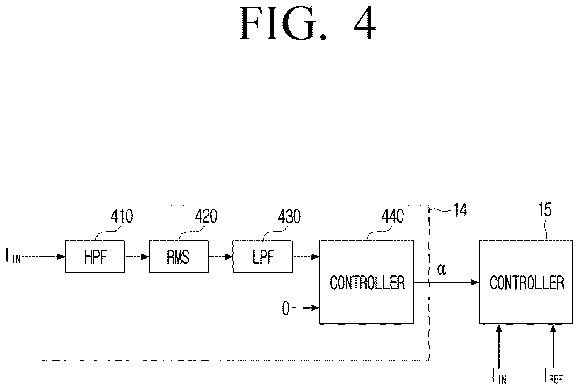

Hereinafter, the second detection part 14 will be described in detail with reference to FIG. 4. FIG. 4 is a control block diagram illustrating a configuration of the second detection part 14 according to an embodiment of the disclosure.

Referring to FIG. 4, the second detection part 14 may include a high-pass filter 410 and a calculation part.

Here, the high-pass filter 410 may filter a predetermined frequency band of an input current. In the case of a harmonic component included in an input current, it falls under a high frequency band, and thus only the harmonic component included in the input current may pass through the high-pass filter 41, and the remaining components other than the harmonic component may be blocked by the high-pass filter 410. Here, a cut-off frequency set in the high-pass filter 410 may be set as a value smaller than a switching frequency of the at least one switch 12.

As an example, the cut-off frequency set in the high-pass filter 410 may have a value greater than or equal to 1Khz. Accordingly, a frequency component smaller than or equal to 1Khz included in an input current input into the second detection part 14 may be blocked by the high-pass filter 410, and a frequency component exceeding 1Khz may pass through the high-pass filter 410, and then may be transmitted to the calculation part. As an example, the cut-off frequency of the high-pass filter 410 may be 5Khz.

Meanwhile, according to an embodiment of the disclosure, the high-pass filter 410 may be implemented as a band-pass filter. Here, the band-pass filter may make only a harmonic component within the predetermined frequency band included in the input current pass through.

The calculation part may calculate an average value by using output information of the high-pass filter 410. Specifically, as the input current passes through the high-pass filter 410, the calculation part may receive the harmonic component included in the input current, and calculate an average value of the received harmonic component. For this, referring to FIG. 4, the calculation part may obtain an average value of the harmonic component by obtaining a root mean square (RMS) value for the harmonic component, and making the obtained RMS value pass through the low-pass filter 430.

Meanwhile, the second detection part 14 may further include a controller 440. Here, the controller 440 included in the second detection part 14 may output a compensation value for removing the harmonic component of the input current. Hereinafter, the controller included in the second detection part 14 will be referred to as the second controller 440.

The second controller 440 may identify a compensation value for removing the average value of the harmonic component of the input current obtained through the high-pass filter 410 and the calculation part. For this, the second controller 440 may receive inputs of a command value of "0" and the average value of the harmonic component of the input current, and then obtain compensation information regarding the input current for offsetting the harmonic component. Specifically, the second controller 440 may calculate a compensation value that makes the average value of the harmonic component become "0" which is the command value, and output the compensation value. Then, the second detection part 14 may obtain the compensation value output through the second controller 440, and transmit the obtained compensation value to the first controller 15.

Here, the second controller 440 may output the compensation value according to any one control method among the P control method, the PI control method, or the PID control method. Then, the first controller 15 may generate a control signal that offsets the harmonic component included in the input current, and matches the phase of the input current with the phase of the input voltage based on the compensation value received from the second controller 440 and the compensation value obtained based on the command current and the input current input into the first controller 15. Then, a PWM signal controlling the at least one switch 12 may be generated through a PWM generator 16 based on the control signal generated by the first controller 15.

Meanwhile, a duty ratio of the PWM signal may be changed such that the input current can track the command current. Also, in case a harmonic component is included in the input current, the duty ratio may be changed such that the harmonic component can be removed.

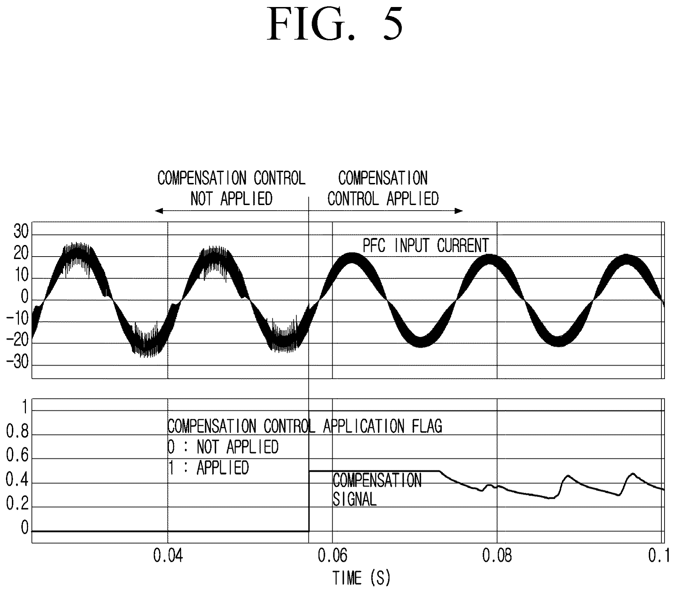

FIG. 5 is a diagram illustrating an input current from which a harmonic component was removed according to a control signal of a PFC converter according to an embodiment of the disclosure.

Referring to FIG. 5, in case the PFC converter part 112 according to an embodiment of the disclosure that includes the second detection part 14 is not used, a harmonic component is repeatedly included in the input current. This is because the PFC converter part 112 controls the input current without reflecting compensation information for the harmonic component obtained through the second detection part 14. However, in case the PFC converter part 112 according to an embodiment of the disclosure that includes the second detection part 14, and controls an input current based on compensation information for a harmonic component of the input current obtained through the second detection part 14 is used, the harmonic component may be removed from the input current.

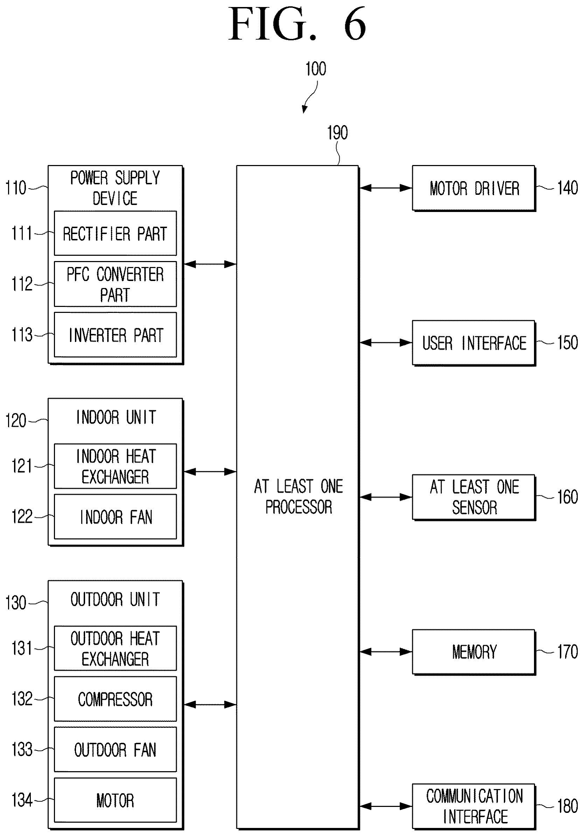

FIG. 6 is a configuration diagram of the electronic apparatus 100 including the power supply device 110 according to an embodiment of the disclosure.

According to an embodiment of the disclosure, the electronic apparatus 100 may be implemented as various electronic apparatuses 100 including a motor such as an air conditioner, an air handling unit (air control unit), etc. Hereinafter, the electronic apparatus 100 according to an embodiment of the disclosure that is implemented as an air conditioner will be explained.

Referring to FIG. 6, the electronic apparatus 100 includes a power supply device 110, an indoor unit 120, an outdoor unit 130, a motor driver 140, a user interface 150, at least one sensor 160, memory 170, a communication interface 180, and at least one processor 190. Also, the indoor unit 120 includes an indoor heat exchanger 121 and an indoor fan 122, and the outdoor unit 130 includes an outdoor heat exchanger 131, a compressor 132, an outdoor fan 133, and a motor 134. To the power supply device 110 (and the rectifier part 111, the PFC converter part 112, and the inverter part 113) illustrated in FIG. 6, the embodiments of the disclosure explained based on FIG. 2 to FIG. 5 are applied identically, and thus detailed explanation will be omitted.

The electronic apparatus 100 may include the indoor unit 120 and the outdoor unit 130. Specifically, the electronic apparatus 100 may include the outdoor unit 130 that exchanges heat with the outdoor air by using a refrigerant, and the indoor unit 120 that performs a conditioning operation of the indoor air by exchanging a refrigerant with the outdoor unit.

The indoor unit 120 may be connected with the outdoor unit 130, and exchange a refrigerant. Here, the indoor unit 120 may be connected with the outdoor unit 130 through a pipe for exchanging a refrigerant. When a refrigerant in a liquefied state is introduced from the outdoor unit 130, the indoor unit 120 vaporizes the refrigerant in a liquefied state through an evaporator (not shown). Then, when the outdoor air is suctioned into the indoor unit by driving the indoor fan 122 included in the indoor unit 120, the indoor unit 120 discharges the cooled air generated through heat exchange between the outdoor air and the refrigerant.

Meanwhile, the outdoor unit 130 changes the refrigerant into a compressed liquefied state of a high temperature and high pressure through the compressor 132. Then, the outdoor unit 130 suctions the outdoor air by using the outdoor fan 133 provided on the outdoor unit 130. When the temperature of the refrigerant in a liquefied state is reduced by the suctioned outdoor air, the outdoor unit 130 discharges the refrigerant in a liquefied state to the indoor unit 120 through the pipe for exchanging a refrigerant. Meanwhile, in the pipe for exchanging a refrigerant, an expansion valve may be provided. Here, the density and the pressure of the refrigerant that passes through the pipe including the expansion valve may become reduced, and the refrigerant may be changed to a state wherein evaporation is easy.

The indoor heat exchanger 121 exchanges heat between air introduced into the electronic apparatus 100 and the refrigerant provided from the outdoor unit. Specifically, the indoor heat exchanger 121 may perform a role of an evaporator (not shown) during cooling. In other words, the indoor heat exchanger 121 may make latent heat necessary for phase transition wherein a refrigerant in a foggy state of low pressure and a low temperature vaporizes into gas absorbed from the air introduced into the indoor unit 120.

In contrast, the indoor heat exchanger 121 may perform a role of a condenser during heating. In other words, if the flow of the refrigerant is reversed in an opposite manner to cooling, heat of the refrigerant that passes through the indoor heat exchanger 121 may be discharged to the air introduced into the indoor unit.

In the outdoor heat exchanger 131, heat exchange between the gaseous refrigerant of a high temperature and high pressure compressed at the compressor 132 and the outdoor air suctioned through the outdoor fan 133 is performed. The outdoor fan 133 may be a component that forcibly discharges the outdoor air by the motor 134 connected to the outdoor fan 133 such that heat exchange is performed in the outdoor heat exchanger 131. The outdoor fan 133 may be arranged around the outdoor heat exchanger 131 such that heat exchange between the refrigerant circulating in the outdoor heat exchanger 131 and the outdoor air can be performed effectively. Also, the rotation speed of the outdoor fan 133 may be changed based on a control signal transmitted from the processor 190.

Meanwhile, the motor 134 may receive power from the power supply device 110. Specifically, the motor 134 may rotate as a voltage (or a current) converted by the inverter part 113 is applied. In particular, a voltage (or a current) applied to the motor 134 may be generated as a voltage varied by a switching operation of the PFC converter part 112 is converted by the inverter part 113. Then, after receiving power from the power supply device 110, the motor 134 may change the rotation speed and the rotation direction based on a control signal of the processor 190. Meanwhile, the compressor 132 may compress the refrigerant input into the compressor 132 by using rotation power of the motor 134.

The indoor fan 122 may suction air outside the indoor unit by a rotation. Specifically, the indoor fan 122 may suction air outside the indoor unit to the indoor unit by a rotation force generated according to driving of the motor connected to the indoor fan 122. In addition, the electronic apparatus 100 may discharge the cooled air to the outside of the electronic apparatus 100 by driving the indoor fan 122. For this, according to an embodiment of the disclosure, the indoor fan 122 may be implemented as a plurality of fans 122, and each indoor fan 122 may respectively perform a role of discharging the cooled air to the outside of the electronic apparatus 100, or suctioning the air outside the indoor unit.

The motor driver 140 may be a component that is connected with the motor 134 connected to the outdoor fan 133 (or the motor connected to the indoor fan 122), and transmits a control signal to the motor 134. Specifically, if the motor driver 140 receives a control signal generated according to a user input from the processor 190, the motor driver 140 may control the rotation speed and the rotation direction of the motor 134 so as to correspond to the user command. In particular, the motor driver 140 may adjust an operation of the motor 134 by controlling power applied to the motor 134.

Meanwhile, the motor driver 140 may also be implemented as a plurality of drivers that respectively control the motor 134 connected to the outdoor fan 133 and the motor connected to the indoor fan 122.

The user interface 150 is a component that is used in performing interaction between the electronic apparatus 100 and the user, and the processor 190 receives inputs of various kinds of information such as control information of the electronic apparatus 100 through the user interface 150. Meanwhile, the user interface 150 may include at least one of a touch sensor, a motion sensor, a button, a jog dial, or a switch, but is not limited thereto.

The sensor 160 obtains various kinds of sensing information regarding the electronic apparatus 100 and the surroundings of the electronic apparatus 100. As an example, the sensor 160 may include a temperature sensor 160, and the temperature sensor 160 detects the temperature around the electronic apparatus 100 and the indoor temperature.

In the memory 170, an operating system (O/S) for driving the electronic apparatus 100 may be stored. Also, in the memory 170, various kinds of software programs or applications for the electronic apparatus 100 to operate according to the various embodiments of the disclosure may be stored. In addition, in the memory 170, various kinds of information such as various kinds of data that is input or set or generated during execution of a program or an application may be stored.

The communication interface 180 may perform communication with an external device based on a wireless communication network. For example, the communication interface 180 may receive a control command for the electronic apparatus 100 from a control device (e.g., a remote control, etc.) interlocked with the electronic apparatus 100. As a wireless communication network, for example, Bluetooth, Bluetooth Low Energy, CAN communication, Wi-Fi, Wi-Fi Direct, ultra-wideband (UWB) communication, Zigbee, infrared Data Association (IrDA), or near field communication (NFC), etc. may be included.

Meanwhile, the electronic apparatus 100 may further include a display. The display may display various kinds of visual information related to the electronic apparatus 100. For example, the display may display information such as a temperature, a wind volume, etc. The display may be implemented as displays in various forms such as a liquid crystal display (LCD), an organic light emitting diodes (OLED) display, an LED display, a plasma display panel (PDP), etc. Inside the display, driving circuits that may be implemented in forms such as an a-si TFT, a low temperature poly silicon (LTPS) TFT, an organic TFT (OTFT), etc., and a backlight unit, etc. may also be included together. Meanwhile, the display may be implemented as a touch screen combined with a touch sensor, a flexible display, a 3D display, etc.

Also, the display according to an embodiment of the disclosure may include not only a display panel outputting images, but also a bezel housing the display panel. In particular, a bezel according to an embodiment of the disclosure may include a touch sensor (not shown) for detecting user interactions.

The at least one processor 190 controls the overall operations of the electronic apparatus 100. Specifically, the at least one processor 190 may be electrically connected with the components included in the electronic apparatus 100, and control the overall operations of the electronic apparatus 100 by executing the at least one instruction stored in the memory 170.

In particular, the at least one processor 190 may provide a control signal for controlling the motor to the motor driver. Here, the control signal may be a control signal that controls the rotation speed and the rotation direction, etc. of the motor 134. In particular, the control signal may be a signal for controlling the operation of the motor 134 to correspond to a user input or a predetermined condition when the user input is received or the predetermined condition is satisfied.

The at least one processor 190 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 190 may control one or a random combination of the other components of the electronic apparatus 100, and perform an operation related to communication or data processing. Also, the at least one processor 190 may execute one or more programs or instructions stored in the memory 170. For example, the at least one processor 190 may perform the method according to an embodiment of the disclosure by executing the at least one instruction stored in the memory 170.

In case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 190 may be implemented as a single core processor including one core, or may be implemented as one or more multicore processors including a plurality of cores (e.g., multicores of the same kind or multicores of different kinds). In case the at least one processor 190 is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor 190 may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

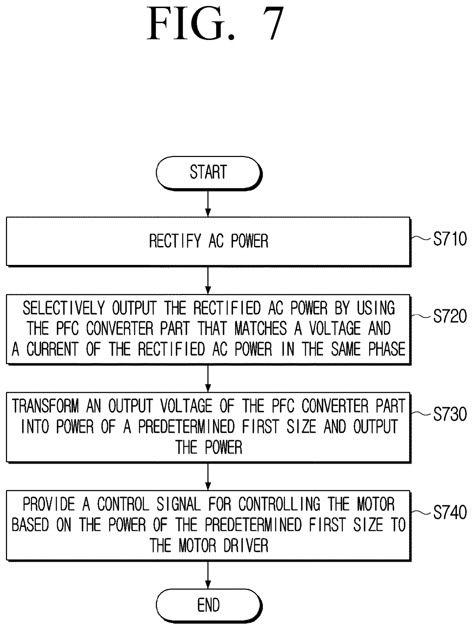

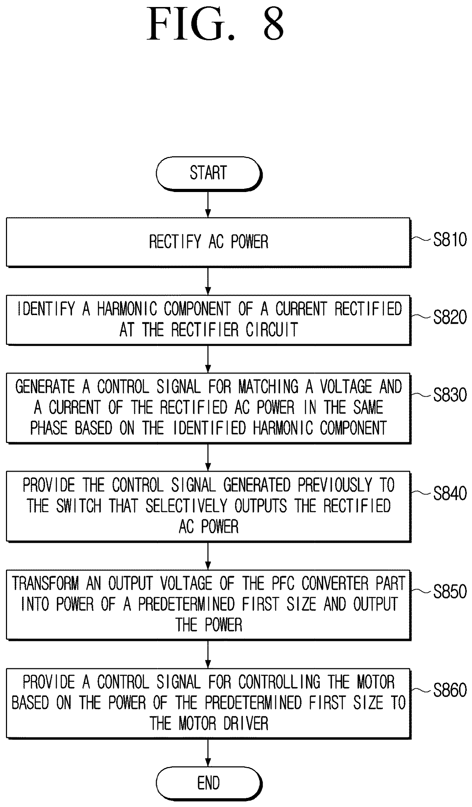

FIG. 7 and FIG. 8 are sequence diagrams schematically illustrating a power supply method according to an embodiment of the disclosure. The steps S810, S850, and S860 illustrated in FIG. 8 may correspond to the steps S710, S730, and S740 illustrated in FIG. 7.

Referring to FIG. 7, the electronic apparatus 100 rectifies AC power in the step S710. Specifically, if AC power is input from external power connected to the electronic apparatus 100, the electronic apparatus 100 rectifies an AC voltage applied based on the input AC power in the step S710.

Then, the electronic apparatus 100 selectively outputs the rectified AC power by using the PFC converter part 112 that matches a voltage and a current of the rectified AC power in the same phase in the step S720. Here, the electronic apparatus 100 may repeatedly turn on/off the at least one switch 12 included in the PFC converter part 112 based on a control signal output by the PFC converter part 112. Here, as the at least one switch 12 is repeatedly turned on/off, the PFC converter part 112 may match the phase of the input current with the phase of the input voltage.

Meanwhile, the PFC converter part 112 may transform the voltage of the AC power and output a DC voltage.

Then, the electronic apparatus 100 may transform an output voltage of the PFC converter part 112 into power of a predetermined first size and output the power in the step S730. Specifically, the electronic apparatus 100 may perform a switching operation for a plurality of switches included in the inverter part 113, and transform the output voltage output through the PFC converter part 112 into a voltage of the first size set based on a rated voltage of the electronic apparatus 100, and output the power.

Then, the electronic apparatus 100 may provide a control signal for controlling the motor based on the power of the predetermined first size to the motor driver in the step S740.

Meanwhile, referring to FIG. 8, according to an embodiment of the disclosure, the electronic apparatus 100 may selectively output rectified AC power, and identify a harmonic component of an input current rectified at the rectifier circuit. Here, the electronic apparatus 100 may identify a harmonic component of the input current, and obtain compensation information of the input current for removing the harmonic component.

Then, the electronic apparatus 100 may generate a control signal based on the identified harmonic component. Specifically, the electronic apparatus 100 may generate a control signal for the at least one switch 12 by reflecting compensation information of the input current for removing the harmonic component and compensation information of the input current for the input current to have the same phase as the input voltage. Here, the control signal may be a PWM signal.

Then, the electronic apparatus 100 may provide the generated control signal to the switch that selectively outputs the rectified AC power. Accordingly, the phase of the input current and the phase of the input voltage of the PFC converter may become the same phase.

Meanwhile, methods according to the aforementioned various embodiments of the disclosure may be implemented in forms of applications that can be installed on a conventional electronic apparatus. Alternatively, the methods according to the aforementioned various embodiments of the disclosure may be performed by using a trained neural network based on deep learning (or a deeply trained neural network), i.e., a learning network model. Also, the methods according to the aforementioned various embodiments of the disclosure may be implemented just with software upgrade, or hardware upgrade for a conventional electronic apparatus. In addition, the aforementioned various embodiments of the disclosure may also be performed through an embedded server provided on an electronic apparatus, or an external server of an electronic apparatus.

Meanwhile, according to an embodiment of the disclosure, the aforementioned various embodiments may be implemented as software including instructions stored in machine-readable storage media, which can be read by machines (e.g.: computers). The machines refer to devices that call instructions stored in a storage medium, and can operate according to the called instructions, and the devices may include an electronic apparatus according to the aforementioned embodiments. In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

Also, according to an embodiment, the methods according to the aforementioned various embodiments may be provided while being included in a computer program product. A computer program product refers to a product, and it can be traded between a seller and a buyer. A computer program product can be distributed on-line in the form of a storage medium that is readable by machines (e.g.: compact disc read only memory (CD-ROM)), or through an application store (e.g.: Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components (e.g.: a module or a program) according to the aforementioned various embodiments may consist of a singular object or a plurality of objects. Further, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner. Also, operations performed by a module, a program, or other components according to the various embodiments may be executed sequentially, in parallel, repetitively, or heuristically. Or, at least some of the operations may be executed in a different order or omitted, or other operations may be added.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic apparatus comprising:
a motor;
a power supply device configured to receive an input of AC power and generate DC power;
a motor driver configured to be provided with the DC power and generate driving power and provide the power to the motor; and
a processor configured to provide a control signal for controlling the motor to the motor driver,
wherein the power supply device comprises:
a rectifier circuit configured to rectify the AC power;
a PFC converter part configured to match a voltage and a current of the rectified AC power in the same phase; and
an inverter part configured to transform output power of the PFC converter part into power of a predetermined first size and output the power, and
the PFC converter part is configured to:
identify a harmonic component of the current rectified at the rectifier circuit, and match the voltage and the current of the rectified AC power in the same phase based on the identified harmonic component.

2. The electronic apparatus of claim 1,
wherein the PFC converter part comprises:
at least one switch that is connected in parallel to the rectifier circuit;
a first detection part configured to detect a size and a phase of the voltage rectified at the rectifier circuit;
a second detection part configured to identify the harmonic component of the current rectified at the rectifier circuit; and
a controller configured to generate a control signal for controlling the at least one switch based on the detected size of the voltage, the detected phase of the voltage, and the identified harmonic component.

3. The electronic apparatus of claim 2,
wherein the second detection part is configured to:
identify a harmonic component of greater than or equal to a predetermined frequency in the current rectified at the rectifier circuit, and size information of the harmonic component.

4. The electronic apparatus of claim 3,
wherein the second detection part comprises:
a high-pass filter part configured to filter a band smaller than the predetermined frequency; and
a calculation part configured to calculate an average value by using output information of the high-pass filter part.

5. The electronic apparatus of claim 4,
wherein the predetermined frequency is higher than or equal to 1Khz.

6. The electronic apparatus of claim 2,
wherein the controller is configured to:
generate a control signal that makes the current rectified at the rectifier circuit have the same phase as the identified phase of the voltage, and makes the identified harmonic component offset.

7. The electronic apparatus of claim 6,
wherein the controller is configured to:
generate a control signal that makes the identified harmonic component offset based on any one control method among a P control method, a PI control method, and a PID control method.

8. The electronic apparatus of claim 5,
wherein the control signal is a PWM signal.

9. The electronic apparatus of claim 2,
wherein the PFC converter part further comprises:
an inductor of which one end is connected to an output end of the rectifier circuit, and of which the other end is connected to the at least one switch.

10. A power supply device comprising:
a rectifier circuit configured to rectify AC power;
a PFC converter part configured to match a voltage and a current of the rectified AC power in the same phase; and
an inverter part configured to transform output power of the PFC converter part into power of a predetermined first size and output the power, and
the PFC converter part is configured to:
identify a harmonic component of the current rectified at the rectifier circuit, and match the voltage and the current of the rectified AC power in the same phase based on the identified harmonic component.

11. The power supply device of claim 10,
wherein the PFC converter part comprises:
at least one switch that is connected in parallel to the rectifier circuit;
a first detection part configured to detect a size and a phase of the voltage rectified at the rectifier circuit;
a second detection part configured to identify the harmonic component of the current rectified at the rectifier circuit; and
a controller configured to generate a control signal for controlling the at least one switch based on the detected size of the voltage, the detected phase of the voltage, and the identified harmonic component.

12. The power supply device of claim 11,
wherein the second detection part is configured to:
identify a harmonic component of greater than or equal to a predetermined frequency in the current rectified at the rectifier circuit, and size information of the harmonic component.

13. The power supply device of claim 12,
wherein the second detection part comprises:
a high-pass filter part configured to filter a band smaller than the predetermined frequency; and
a calculation part configured to calculate an average value by using output information of the high-pass filter part.

14. A method of controlling an electronic apparatus, the method comprising:
rectifying AC power through a rectifier circuit of the electronic apparatus;
selectively outputting the rectified AC power by using a PFC converter part configured to match a voltage and a current of the rectified AC power in the same phase;
transforming an output voltage of the PFC converter part into power of a predetermined first size and outputting the power; and
providing a first control signal for controlling a motor of the electronic apparatus based on the power of the predetermined first size to a motor driver of the electronic apparatus,
wherein the selectively outputting comprises:
identifying a harmonic component of the rectified current;
generating a second control signal for matching the voltage and the current of the rectified AC power in the same phase based on the identified harmonic component; and
providing the generated second control signal to a switch configured to selectively output the rectified AC power.

15. The control method of claim 14,
wherein the identifying comprises:
identifying a harmonic component of greater than or equal to a predetermined frequency in the current rectified at the rectifier circuit, and size information of the harmonic component, and
the generating the second control signal comprises:
calculating an average value corresponding to the harmonic component based on the identified size information of the harmonic component, and generating a control signal for matching the voltage and the current of the rectified AC power in the same phase based on the calculated average value.
